# EUROPEAN PATENT APPLICATION

(11) **EP 1 033 076 A1**
(43) Date of publication of application: **06.09.2000**
(21) Application number: 98953056.3
(22) Date of filing: 16.11.1998
(51) Int. Cl.: A01N 65/00, A01N 25/06, C11B 9/00, A61L 9/01

(54) **HEMATOPHAGOUS INSECT REPELLENT**

(30) Priority: 17.11.1997 JP 31498897
(71) Applicant: TAISHO PHARMACEUTICAL CO. LTD, Tokyo 170-8633 (JP)
(72) Inventor: TAKAGI, Masahiro, Nagasaki-shi, Nagasaki 852-8042 (JP); OGINO, Kazumasa, Taisho, Toshima-ku, Tokyo 170-8633 (JP)
(74) Representative: HOFFMANN - EITLE
(86) International application number: JP9805141
(87) International publication number: WO9925196

(57) **Abstract**

There is provided an indoor hematophagous insect repellent having excellent safety and effect in the form of an indoor aromatic containing nootkatone, valencene or a mixture thereof at 5% by weight or more, or an aerosol containing nootkatone, valencene or a mixture thereof at 0.1% by weight or more.

## Description

### TECHNICAL FIELD

This invention relates to an indoor hematophagous insect repellent, which comprises nootkatone, valencene or a mixture thereof.

### BACKGROUND ART

Typically known hematophagous insects occurring in summer season are *Culex pipiens pallens*, *Aedes albopictus*, *Culex pipiens molestus Forskal* and others. A mosquito-repellent incense or an electric mosquito-repellent device of a mat or liquid type has been widely employed in general domestic household in order to avoid hematophagous damages by such harmful insects. These preparations can exert a mosquito-repellent effect through volatilization of an active ingredient in air by burning or heating. However, since burning, heating or smoking could not be avoided while sleeping, there has been suggested a method for utilizing a perfume composition having a mosquito-repellent effect which contains a terpene aldehyde containing citral or citronellal, a terpene hydrocarbon containing limonene or terpinene and others, which may be easily volatilized even if heat is not applied (JP-A-3-285993).

However, a satisfactory mosquito-combating or -repellent effect could not be attained with a preparation using the said perfume composition having a mosquito-repellent effect.

### DISCLOSURE OF INVENTION

The present inventors have made various studies on repellent effect by volatile terpene substances on hematophagous insects and found out that valencene and nootkatone, which have been found from essential oils of citrus fruits and used as a flavor for beverage, may create a space to which hematophagous insects are repellent and that they exert a higher repellent effect than the recent typical repellent, N,N-diethyl-m-toluamide (DEET) and a perfume composition having a mosquito-combating effect, upon which this invention has been completed.

More specifically, this invention provides an indoor hematophagous insect repellent, which comprises as an active ingredient nootkatone, valencene or a mixture thereof.

Nootkatone and valencene employed in this invention are compounds obtainable from a natural product such as grapefruit oil and the like according to a general method for the isolation and purification of terpenes. Also employed are those organic compounds prepared according to organic synthesis and others.

The hematophagous insect repellent of the invention creates a repellent space to hematophagous insects such as mosquitoes and is applied after formulating to indoor aromatics, aerosols, sheets or coatings, usually retained in a liquid, solid, gel-like or gaseous carrier. An amount of nootkatone, valencene or mixture thereof to be blended into the hematophagous insect repellent may be appropriately selected and determined depending upon the dosage form and the place to be applied. Though not particularly limited, a mosquito-repellent effect by nootkatone, valencene or a mixture thereof may depend upon an aerial concentration and the effect can be exerted at a concentration of 0.4 µg/cm³ and an excellent effect can be achieved at a concentration of 0.7 µg/cm³ or more. Thus, it is desirable to prepare a preparation so as to reach the aerial concentration of at least 0.4 µg/cm³. In order to provide such an aerial concentration, it is desirable to blend nootkatone, valencene or a mixture thereof at 5% by weight or more, for example, in the cast of the indoor aromatic or 0.1% by weight or more in the case of the aerosol.

Pyrethroid insecticides such as empenthrin, fungicides, antifungal agents, antioxidants, coloring agents and various perfume ingredients for perfuming may be also incorporated into the hematophagous insect repellent of this invention.

### BRIEF DESCRIPTION OF DRAWING

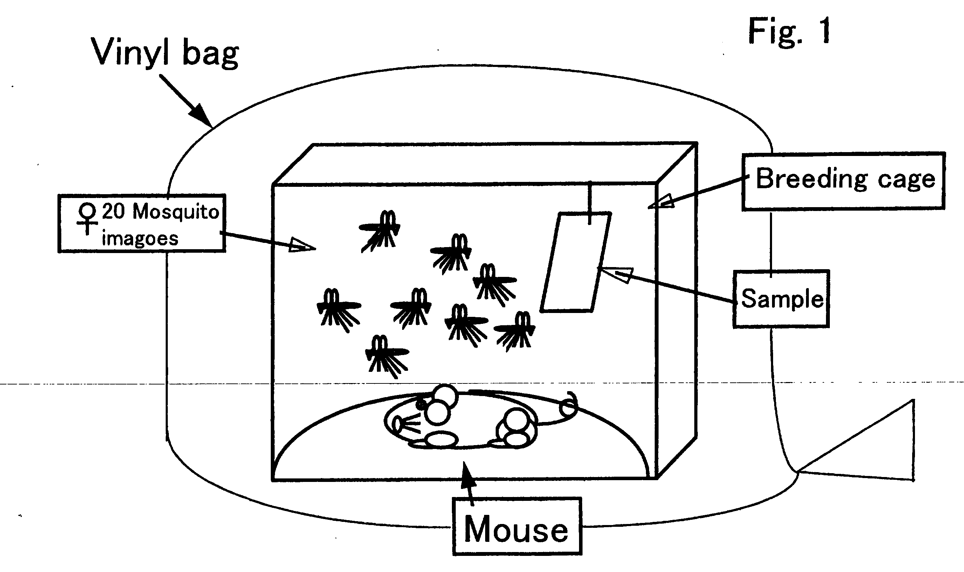

Fig. 1 schematically illustrates the device as used in Test Example 1.

### BEST MODE FOR CARRYING OUT THE INVENTION

The hematophagous insect repellent of the invention can easily create a space, which is repellent to hematophagous insects but is fully safe, by providing therein nootkatone, valencene or a mixture thereof at beyond the prescribed level. The invention will be specifically illustrated by way of the following Examples and Test Examples, but it is not to be limited thereto.

### Example 1

A mixture of 1 g of nootkatone and 25 g of alcohol was placed into a pressure vessel, 275 g of a propellant was charged under cooling or pressure and then an injection nozzle was mounted to the vessel to prepare an aerosol. This aerosol can be fitted to an automatic spraying device for use as a time controlled spraying device.

### Example 2

A liquid formulation was prepared by mixing and stirring 10 g of nootkatone, 60 g of an 80% aqueous solution of alcohol and 40 g of 3-methoxy-3-methyl-1-butanol. The liquid formulation was charged into a closed vessel with a cap and a rod-shaped liquid-absorbing wick was inserted into the cap to prepare a liquid indoor aromatic.

### Example 3

2 g of carrageenan, 0.5 g of locust bean gum, 5 g of propylene glycol and 80 g of purified water were mixed and the mixture was molten by heating. To the melt were added 0.1 g of benzalkonium chloride, 0.05 g of indigocarmine and 5 g of nootkatone. Then, the mixture was placed into a vessel and cooled and molded to form a solid indoor aromatic.

### Example 4

1.5 g of carrageenan, 0.25 g of potassium chloride, 15 g of 3-methoxy-3-methyl-1-butanol, 0.1 g of benzethonium chloride, 0.01 g of tartrazine and 67.14 g of purified water were mixed and the mixture was molten by heating. To the melt were added 6 g of hydrogenated castor oil and 10 g of nootkatone. Then, the mixture was placed into a vessel and cooled and molded to form a solid indoor aromatic.

### Test Example 1

A 10% solution of nootkatone, valencene and a control sample dissolved in alcohol was prepared and 0.1 ml aliquot was added dropwise to a filter paper with a diameter of 11 cm (TOYOROSHI K.K.). Then, the filter paper was adhered to the upper part of a cage (30 cm³) having the wall made of a flexible plastic net and containing 20 female imagoes of *Aedes albopictus*. The cage was placed into a vinyl bag with an inner volume of 45000 cm³, the mouse fixed with wire net was placed on the lowest part of the cage and the vinyl bag was closed. Thereafter, the number and behavior of the mosquitoes flying for blood-sucking were observed. Also, the above tests were repeated using the filter papers to which 0.1 ml each of terpene aldehydes, citronella oil and geranium oil, whose mosquito-combating effect is known, and the typical repellent, DEET, was added dropwise as control samples in the same manner as described above. The filter paper to which alcohol alone was added dropwise was used as a blank. The number of the mosquitoes flying after lapse of a prescribed time is shown in Table 1.

**Table 1**

| The number of the mosquitoes flying for blood-sucking | | |
|---|---|---|
| Sample | 5 min. after | 10 min. after |
| Nootkatone | 0 | 0 |
| Valencene | 0 | 1 |
| Citronella oil | 10 | 8 |
| Geranium oil | 4 | 12 |
| DEET | 3 | 5 |
| Blank | 10 | 7 |

### Test Example 2

The indoor aromatic as prepared in Example 2 was placed in the right test box of three connected test boxes, each having a volume of 0.5 m³. In each of the left and right boxes were placed the mouse fixed with wire net and a cup containing water, while 50 female imagoes of *Culex pipiens pallens* were placed in the middle box. Thereafter, the number and behavior of the mosquitoes were observed. Also, the above tests were repeated using the indoor aromatics prepared with terpene aldehydes, citronella oil and geranium oil, whose mosquito-combating effect is known, and the typical repellent, DEET, in the same manner as described in Example 2. The indoor aromatic as prepared from alcohol alone was used as a blank. The number of the mosquitoes in each test box after one and 4 hours is shown in Table 2 and a total number of the mosquitoes flying into the test boxes from the starting of the test up to one hour later is shown in Table 3.

**Table 2**

| Number of mosquitoes in each test box | | | | | | |
|---|---|---|---|---|---|---|
| Sample | 1 hr. after | | | 4 hr. after | | |
| | Left | Middle | Right | Left | Middle | Right |
| Nootkatone | 30 | 20 | 0 | 38 | 12 | 0 |
| Citronella oil | 23 | 18 | 9 | 20 | 16 | 14 |
| Geranium oil | 22 | 20 | 8 | 26 | 13 | 11 |
| DEET | 25 | 15 | 10 | 25 | 8 | 17 |
| Blank | 20 | 8 | 22 | 25 | 2 | 23 |

**Table 3**

| Total number of mosquitoes flying to each test box | | | |
|---|---|---|---|
| Sample | Left | Middle | Right |
| Nootkatone | 95 | 56 | 2 |
| Citronella oil | 78 | 59 | 28 |
| Geranium oil | 85 | 62 | 21 |
| DEET | 69 | 71 | 38 |
| Blank | 82 | 71 | 79 |

### INDUSTRIAL APPLICABILITY

The invention provides an indoor hematophagous insect repellent which is not only effective but also excellent in view of safety.

## Claims

1. An indoor hematophagous insect repellent which comprises as an active ingredient nootkatone, valencene or a mixture thereof.

2. An indoor aromatic wherein nootkatone, valencene or a mixture thereof is incorporated at 5% by weight or more.

3. An aerosol wherein nootkatone, valencene or a mixture thereof is incorporated at 0.1% by weight or more.
